# EUROPEAN PATENT APPLICATION

(11) **EP 2 333 307 A1**
(43) Date of publication of application: **15.06.2011**
(21) Application number: 08877058.1
(22) Date of filing: 24.09.2008
(51) Int. Cl.: F02M 61/18

(54) **FUEL INJECTION VALVE FOR INTERNAL COMBUSTION ENGINE AND METHOD OF MANUFACTURING THE SAME**

(71) Applicant: Toyota Jidosha Kabushiki Kaisha, Toyota-shi, Aichi 471-8571 (JP)
(72) Inventor: HASHIZUME, Takeshi, Toyota-shi Aichi 471-8571 (JP)
(74) Representative: Winter, Brandl, Fürniss, Hübner, Röss, Kaiser, Polte - Partnerschaft
(86) International application number: PCT/JP2008/067140
(87) International publication number: WO 2010/035311

(57) **Abstract**

In a fuel injection valve of an internal combustion engine, there is provided the fuel injection valve of an internal combustion engine in which the shorter the distances from nozzle holes to a wall surface of a combustion chamber, the larger a spray angle of fuel becomes. In a fuel injection valve (1) of an internal combustion engine which has a plurality of nozzle holes and injects fuel to a combustion chamber of the internal combustion engine, the surface roughness of nozzle hole wall surfaces is set for each nozzle hole according to the distances of the nozzle holes to a combustion chamber wall surface (210). As the surface roughness changes, the degree of turbulence of the flow of fuel changes, so a spray angle of the fuel changes.

## Description

### [TECHNICAL FIELD]

The present invention relates to a fuel injection valve of an internal combustion engine and its method of manufacture.

### [BACKGROUND ART]

A fuel injection valve which serves to directly inject fuel into a cylinder of an internal combustion engine may not be able to be arranged on the central axis of a combustion chamber, depending on the positions of placement of an intake valve and an exhaust valve. For example, in an internal combustion engine which is provided with one intake valve and one exhaust valve per cylinder, respectively, the intake valve and the exhaust valve are made large in size so as to ensure the flow rates of intake air and exhaust gas. Therefore, it is necessary to shift the position of placement of a fuel injection valve from the central axis of the cylinder. On the other hand, in cases where a combustion chamber is formed on an upper surface of a piston, the position in which the combustion chamber can be formed is limited due to the structure of the piston. For that reason, there may be a case where a fuel injection valve can not be arranged on the central axis of the combustion chamber.

Here, with the fuel injection valve which is provided with a plurality of nozzle holes and acts to inject fuel in a radial manner, in cases where the nozzle holes are not arranged centering on the central axis of a combustion chamber, the distances from the individual nozzle holes to the wall surface of the combustion chamber are different for each nozzle hole. For this reason, when fuel is injected from the individual nozzle holes in the same manner, there is a fear that fuel injected from those nozzle holes of which the distances to the combustion chamber wall surface are short may adhere to the combustion chamber wall surface. In addition, there is also a fear that the air fuel ratio of an air fuel mixture in a cylinder may become nonuniform, so a smoke may be generated or HC may be discharged. On the other hand, there has been known a technique in which fuel is supplied in a uniform manner by adjusting the shape of a combustion chamber, the direction of injection of the fuel, etc., (for example, see a first patent document).

In addition, it can be considered that in order to suppress fuel from adhering to the combustion chamber wall surface, the closer the nozzle holes are to the combustion chamber wall surface, the smaller the diameters of the nozzle holes are made. However, when the diameter of a nozzle hole is made small, the angle (spray angle) at which fuel spreads from that nozzle hole becomes small, so in order to make the air fuel ratio uniform, it is necessary to increase the number of the nozzle holes. Thus, such a fuel injection valve makes its manufacturing processes complicated, and also raises the cost of manufacture.
First Patent Document: Japanese patent application laid-open No. H06-221163

### [DISCLOSURE OF THE INVENTION]

### [PROBLEMS TO BE SOLVED BY THE INVENTION]

The present invention is made in view of the problems as referred to above, and has for its object to provide a fuel injection valve of an internal combustion engine in which the shorter the distances from nozzle holes thereof to a wall surface of a combustion chamber, the larger the spray angles of fuel thereof becomes.

### [MEANS FOR SOLVING THE PROBLEMS]

In order to achieve the above-mentioned object, a fuel injection valve of an internal combustion engine according to the present invention adopts the following measure. That is,
in a fuel injection valve of an internal combustion engine which has a plurality of nozzle holes, and injects fuel to a combustion chamber of the internal combustion engine,
it is characterized in that the surface roughness of wall surfaces of the nozzle holes is set for each nozzle hole according to the distances of the nozzle holes to a wall surface of the combustion chamber.

This surface roughness is a surface roughness in a part with which fuel is in contact inside each of the nozzle holes, that is, a part through which fuel flows. Here, the larger the surface roughness of the nozzle hole wall surfaces, the larger the disturbance or turbulence of the flow of the fuel becomes, and hence at the larger angles, the fuel spreads at the time of flowing out of the nozzle holes. In other words, the spray angles of the fuel become larger. Moreover, the larger the angles at which the fuel spreads, the weaker the impetus or momentum of the fuel becomes, so the penetration force (penetration) of the fuel reduces, and the arrival distance or range of the fuel becomes shorter. In other words, it becomes more difficult for the fuel to adhere to the combustion chamber wall surface. Thus, because the form of the fuel sprays changes depending on the surface roughness of the nozzle hole wall surfaces, it is possible to suppress the adhesion of the fuel to the combustion chamber wall surface, by setting the surface roughness of the nozzle hole wall surfaces according to the distances from the nozzle holes to the combustion chamber wall surface.

The surface roughness can be represented by an arithmetic mean roughness, a maximum height, a ten-point mean roughness, or the like. The larger the values of these figures, the coarser a surface becomes. In addition, the surface roughness, together with a surface swell, etc., may be represented as a surface property. For example, the larger the surface swell becomes, the larger the turbulence of the flow of fuel also becomes, so the spray angle of the fuel becomes larger. In other words, the larger the swell, the larger the spray angle becomes, so the penetration force of the fuel becomes smaller.

In addition, the distances between the nozzle holes to the combustion chamber wall surface mean a distance of each nozzle hole to the combustion chamber wall surface lying on an extension line of the central axis of the nozzle hole, for example. This may also be a distance of each nozzle hole to the combustion chamber wall surface in the direction of movement of the center of a spray of fuel therefrom.

In addition, in the present invention, the shorter the distances between said nozzle holes and said combustion chamber wall surface, the larger the surface roughness of said nozzle hole wall surfaces can be made.

In other words, the larger the surface roughness of the wall surface of a nozzle hole, at the larger angle, fuel is injected therefrom, and also the weaker the penetration force of the fuel becomes, as a result of which even if the distance between that nozzle hole and the combustion chamber wall surface becomes short, it becomes difficult for the fuel to adhere to the combustion chamber wall surface. In addition, because the spray range of the fuel is expanded to a horizontal direction as seen from that nozzle hole, it is not necessary to increase the number of nozzle holes. Here, note that the surface roughness may be made larger in a stepless manner according to the distance between a nozzle hole and the combustion chamber wall surface, or may be made ger in a stepwise manner every certain amount of distance.

Moreover, in the present invention, the shorter the distances between said nozzle holes and said combustion chamber wall surface, the larger the intervals between the adjacent nozzle holes can be made.

That is, the shorter the distances between the nozzle holes and the combustion chamber wall surface, the wider the spray ranges of the fuel become in the horizontal direction, as seen from the nozzle holes, so the distances between the nozzle holes are made longer so that the individual fuel sprays therefrom may not overlap with one another. As a result, it is possible to suppress the occurrence of a location where the air fuel ratio becomes excessively low. The intervals between the nozzle holes may be made larger in a stepless manner or in a stepwise manner according to the distances between the nozzle holes and the combustion chamber wall surface.

In the present invention, said fuel injection valve can be arranged at a position offset from a central axis of the combustion chamber of the internal combustion engine.

When the fuel injection valve is located on the central axis of the combustion chamber of the internal combustion engine, the distance from a central axis of the fuel injection valve to the combustion chamber wall surface in any injection directions of the fuel becomes equal or uniform. In other words, the fuel injection valve being offset or shifted from the central axis of the combustion chamber of the internal combustion engine means that the nozzle holes of the fuel injection valve are not arranged centering on the central axis of the combustion chamber. Therefore, the distances from the nozzle holes of the fuel injection valve to the combustion chamber wall surface change according to the nozzle holes. This can be said that the distance from the fuel injection valve to the combustion chamber wall surface differs according to the injection direction of the fuel.

In such a case, if the surface roughness of each nozzle hole wall surface is set according to the distance from the nozzle hole to the combustion chamber wall surface, it is possible to suppress the fuel from adhering to the combustion chamber wall surface. In addition, if the intervals of the nozzle holes are set in combination with this, it is also possible to suppress the occurrence of a location at which the air fuel ratio is excessively low.

In addition, in order to achieve the above-mentioned object, it is also possible to adopt the following method for manufacturing a fuel injection valve of an internal combustion engine. That is, a method for manufacturing a fuel injection valve of an internal combustion engine according to the present invention is characterized by comprising:
a step in which when wall surfaces of nozzle holes are ground by causing slurry to pass through the nozzle holes in the fuel injection valve of the internal combustion engine, the shorter the distances from the nozzle holes to a wall surface of a combustion chamber on the assumption that the fuel injection valve is mounted on the internal combustion engine, the smaller an amount of the slurry is made.

Here, when the amount of the slurry used for grinding is decreased at the time of grinding the nozzle hole wall surfaces, the degree of grinding becomes lower, and so the larger the surface roughness of the nozzle holes becomes. In other words, there is a correlation between the amount of the slurry and the surface roughness of the nozzle holes. The amount of the slurry may be adjusted by changing a flow rate per unit time thereof for each of the nozzle holes, or may be adjusted by changing a total amount of the slurry for each of the nozzle holes. In addition, the period of time for causing the slurry to pass through the nozzle holes may be changed for each of the nozzle holes.

For example, the flow rate of the slurry per unit time can be changed by changing the diameters of the nozzle holes before grinding thereof with the slurry. In other words, the smaller the diameter of a nozzle hole, the more difficult it becomes for the slurry to flow through that nozzle hole, and hence the larger the surface roughness for that nozzle hole becomes. Then, if the diameters of the nozzle holes are set in accordance with the distances from the nozzle holes to the combustion chamber wall surface on the assumption that the fuel injection valve is mounted, it is possible to obtain the surface roughness according to the distances.

### [EFFECT OF THE INVENTION]

According to the fuel injection valve of an internal combustion engine of the present invention, the shorter the distances from the nozzle holes to the combustion chamber wall surface, the larger the spray angles of fuel can be made. As a result of this, the penetration force of the fuel is made smaller, so it is possible to suppress the fuel from adhering to the combustion chamber wall surface.

### [BRIEF DESCRIPTION OF THE DRAWINGS]

[Fig. 1] is a view showing the positional relationship between a fuel injection valve and a piston according to an embodiment of the present invention.
[Fig. 2] is a longitudinal cross section of the fuel injection valve in the vicinity of a tip end thereof according to the embodiment.
[Fig. 3] is a view looking at fuel sprays from above an internal combustion engine when fuel has been injected from the fuel injection valve according to the embodiment.
[Fig. 4] is a flow chart showing a flow of manufacturing the fuel injection valve according to the embodiment.

### [EXPLANATION OF REFERENCE NUMERALS AND CHARACTERS]

- 1: fuel injection valve
- 2: piston
- 11: nozzle holes
- 21: combustion chamber
- 22: central axis of the combustion chamber
- 23: central axis of the piston
- 110: nozzle hole wall surface
- 210: combustion chamber wall surface

### [BEST MODE FOR CARRYING OUT THE INVENTION]

Hereinafter, reference will be made to a specific embodiment of a fuel injection valve of an internal combustion engine according to the present invention based on the attached drawings.

### [First Embodiment]

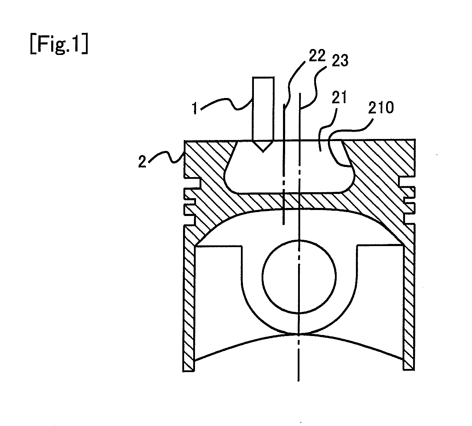

Fig. 1 is a view showing the positional relationship of a fuel injection valve 1 and a piston 2 according to this embodiment of the present invention. This Fig. 1 is a cross sectional view when the piston 2 is cut in the axial direction of a cylinder, at the time the piston 2 is in the vicinity of top dead center. On an upper surface of the piston 2, there is formed a combustion chamber 21 with a part of the upper surface being recessed or concaved toward the inside of the piston 2. This combustion chamber 21 is formed in such a manner that a cross section thereof along a surface orthogonal to the central axis of the piston 2 takes a circular shape. In addition, the central axis 22 of the combustion chamber 21 and the central axis 23 of the piston 2 are in parallel to each other, and are spaced from each other.

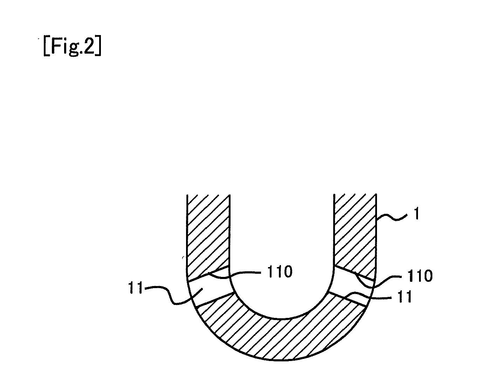

The fuel injection valve 1 is arranged in such a manner that it is spaced or offset from the central axis 22 of the combustion chamber 21. Here, Fig. 2 is a longitudinal cross section of the fuel injection valve 1 in the vicinity of a tip end thereof according to this embodiment. The fuel injection valve 1 according to this embodiment is provided with eight nozzle holes 11. In addition, when the piston 2 is in the vicinity of top dead center, fuel is injected into the combustion chamber 21 from the fuel injection valve 1.

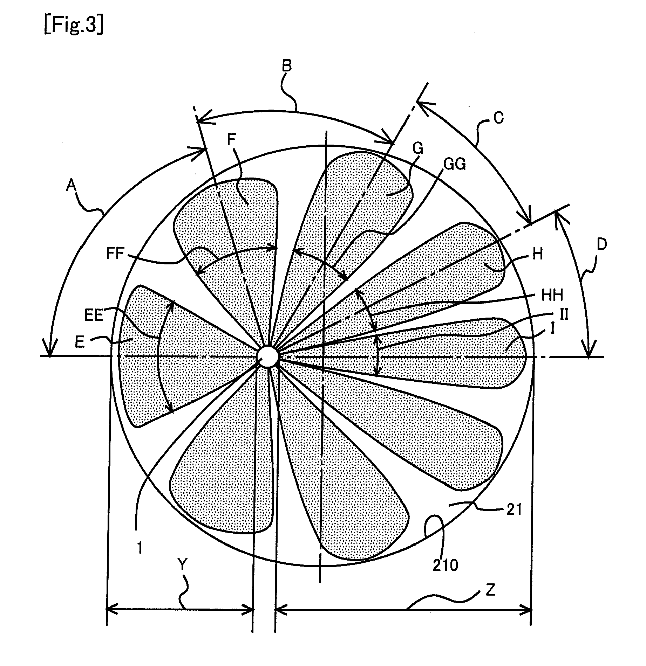

Also, Fig. 3 is a view looking at fuel sprays from above an internal combustion engine when fuel has been injected from the fuel injection valve 1 according to this embodiment. The fuel is injected in a radial manner. The form of the spray of fuel injected from each of the injection holes 11 is changed according to the distance from that nozzle hole 11 to the combustion chamber wall surface 210.

Then, in this embodiment, the spray angle of fuel is changed by adjusting the surface roughness of a wall surface 110 of each nozzle hole at the time of manufacturing the fuel injection valve 1. The surface roughness of each nozzle hole wall surface 110 is set according to the distance between that nozzle hole 11 and the combustion chamber wall surface 210. At this time, the shorter the distance between a nozzle hole 11 and the combustion chamber wall surface 210, the larger the surface roughness of the wall surface 110 of that nozzle hole is made.

In Fig. 3, a distance (Y in Fig. 3) from a nozzle hole 11 to the combustion chamber wall surface 210, which forms a fuel spray of E, is the shortest, and the distances between those nozzle holes 11 to the combustion chamber wall surface 210, which correspond to fuel sprays of F, G and H, respectively, become longer in this order. Then, a distance (Z in Fig. 3) from a nozzle hole 11 to the combustion chamber wall surface 210, which forms a fuel spray of I, is the longest. In other words, the surface roughness of that nozzle hole wall surface 110 which corresponds to the fuel spray of E in Fig. 3 is made the largest, and the surface roughnesses of those nozzle hole wall surfaces 110 which correspond to the fuel sprays of F, G, H and I, respectively, are made successively smaller in this order. Here, the larger the surface roughness of a nozzle hole wall surface 110, the larger the disturbance or turbulence of fuel at the time of passing therethrough becomes, and hence the fuel flowing out of a corresponding nozzle hole 11 to the outside spreads at the larger angle. In other words, the spray angle of the fuel becomes larger. For that reason, the spray angle of fuel becomes smaller in the order of EE, FF, GG, HH and II. In addition, the larger the spray angle of fuel, the smaller the penetration force of the fuel becomes, and hence the shorter the arrival distance or range of fuel becomes. That is, the fuel spray range becomes narrower in width and longer in the direction of fuel movement in the order of E, F, G, H and I.

Thus, the nozzle holes 11 are formed in such a manner that the shorter the distance from each nozzle hole 11 to the combustion chamber wall surface 210 becomes, the spray range of fuel spreads from each nozzle hole at the larger angle.

In addition, in this embodiment, the intervals between the individual nozzle holes 11 and their adjacent nozzle holes 11 are decided in such a manner that the spray ranges of fuel injected from the individual nozzle holes 11 do not overlap with one another. These intervals may also be angles between the individual nozzle holes 11 as seen from the center of the fuel injection valve 1.

That is, in Fig. 3, the positions of the individual nozzle holes 11 are decided in such a manner that the angles between the central axes of adjacent nozzle holes 11 become smaller in the order of A, B, C and D.

In addition, the adjustment of the surface roughness of the nozzle holes 11 is carried out by changing the amount of slurry used to grind the nozzle holes 11 at the time of manufacture for each of the nozzle holes 11. Here, note that the slurry is a fluidic mixture in which solid particulates as abrasive powder exist in a liquid.

For example, the smaller the flow rate of the slurry, the lower the degree or rate at which the nozzle hole wall surface 110 is ground becomes, and hence the larger the surface roughness becomes. In other words, the surface roughness can be adjusted by adjusting the flow rate of the slurry per unit time for each of the nozzle holes 11. The nozzle holes 11 are first formed by making holes, and are then ground by causing the slurry to pass therethrough from an inner side of the fuel injection valve 1.

For example, by adjusting the size of the nozzle holes 11, the flow rate of the slurry per unit time can be adjusted. In other words, the smaller the diameter of the nozzle holes 11 is made, the more difficult it becomes for the slurry to flow therethrough, so the flow rate of the slurry per unit time decreases. For that reason, the smaller the diameter of the nozzle holes, the larger the surface roughness of the nozzle hole wall surfaces 110 becomes.

In addition, for example, if the flow of the slurry passing through one of the nozzle holes 11 is interrupted by blocking or closing the one nozzle hole, the period of time for the slurry to flow through that nozzle hole can be made shorter, as compared with the other nozzle holes 11, so the surface roughness for that nozzle hole can be made larger.

The relation between the spray angle of fuel and the surface roughness can be obtained through experiments, etc. Also, optimum values for the intervals between the nozzle holes 11 and the surface roughness of the nozzle hole wall surfaces 110 can be obtained by experiments.

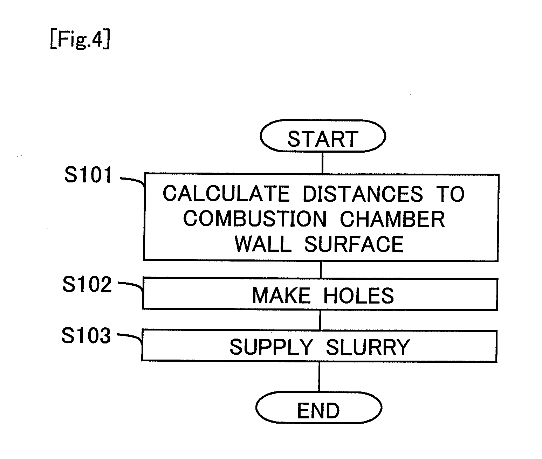

Next, Fig. 4 is a flow chart showing a flow of manufacturing the fuel injection valve 1 according to this embodiment.

In step S101, the distances from the nozzle holes 11 to the combustion chamber wall surface 210 are calculated in a state where the fuel injection valve 1 is mounted on the internal combustion engine. At this time, the distances are calculated for each of the plurality of nozzle holes 11.

In step S102, holes are made in the tip end portion of the fuel injection valve 1. For example, the holes are formed by the use of a drill. At this time, the shorter the distances calculated in step S101, the smaller the diameters of the nozzle holes are made. The relation between the distances and the diameters of the nozzle holes has beforehand been obtained through experiments, etc.

In step S103, the slurry is supplied to the inside of the fuel injection valve 1. As a result of this, the slurry flows out of the nozzle holes 11, so the nozzle hole wall surfaces 110 are ground. Then, because the flow rate of the slurry changes according to the diameters of the nozzle holes, the surface roughness of each of the nozzle hole wall surfaces 110 changes. The supply of the slurry is carried out for a preset period of time.

Then, after the grinding of the nozzle hole wall surfaces 110 is finished, other component parts are incorporated so that the fuel injection valve 1 is completed. Thus, a process step is included in which the shorter the distances from the nozzle holes 11 to the combustion chamber wall surface 210 on the assumption that the fuel injection valve 1 is mounted on the internal combustion engine, the smaller the amount of the slurry is made.

As described above, according to this embodiment, the shorter the distances between the nozzle holes 11 and the combustion chamber wall surface 210, the larger the surface roughness of the nozzle hole wall surfaces 110 is made, and hence the shorter the distances, the larger the spray angles of fuel can be made. As a result of this, the arrival distance or range of fuel can be shortened, so it is possible to suppress the fuel from adhering to the combustion chamber wall surface 210. In addition, the distances between the adjacent nozzle holes 11 are made longer in accordance with the extent to which the fuel spreads in a transverse or horizontal direction, so it is possible to suppress fuel sprays from the individual nozzle holes 11 from overlapping with one another. As a result, the fuel can be supplied to the inside of the combustion chamber in a uniform manner. Therefore, the amount of emissions of HC and PM can be reduced.

Here, note that in this embodiment, the combustion chamber 21 is formed in the piston 2, but even in cases where a combustion chamber is defined as a range or space which is surrounded by a piston and a cylinder head, the same effect can also be obtained. In addition, even in cases where an auxiliary combustion chamber is formed in a cylinder head or the like and a fuel injection valve is provided in the auxiliary combustion chamber, the present invention can be applied to such a case in a similar manner. Moreover, the combustion chamber may not be circular in the horizontal cross section thereof. In other words, the surface roughness of the nozzle hole inner walls and the intervals of the nozzle holes need only be decided according to the distances from the nozzle holes to the combustion chamber wall surface. For example, in cases where the horizontal cross section of the combustion chamber is an ellipse, even if the fuel injection valve is arranged on the central axis of the combustion chamber, the distances of the nozzle holes to the combustion chamber wall surface change according to the directions of the nozzle holes. Even in such a case, the present invention can be similarly applied as in this embodiment.

## Claims

1. A fuel injection valve of an internal combustion engine which has a plurality of nozzle holes, and injects fuel to a combustion chamber of the internal combustion engine, **characterized in that**
the surface roughness of wall surfaces of the nozzle holes is set for each nozzle hole according to the distances between the nozzle holes and a wall surface of the combustion chamber.

2. The fuel injection valve of an internal combustion engine as set forth in claim 1, **characterized in that** the shorter the distances between said nozzle holes and said combustion chamber wall surface, the larger the surface roughness of said nozzle hole wall surfaces is made.

3. The fuel injection valve of an internal combustion engine as set forth in claim 1 or 2, **characterized in that** the shorter the distances between said nozzle holes and said combustion chamber wall surface, the larger the intervals between the adjacent nozzle holes are made.

4. The fuel injection valve of an internal combustion engine as set forth in any one of claims 1 through 3, **characterized in that** said fuel injection valve is arranged at a position offset from a central axis of said combustion chamber of the internal combustion engine.

5. A method for manufacturing of a fuel injection valve of an internal combustion engine **characterized by** comprising a step in which when wall surfaces of nozzle holes are ground by causing slurry to pass through the nozzle holes in the fuel injection valve of the internal combustion engine, the shorter the distances from the nozzle holes to a wall surface of a combustion chamber on the assumption that the fuel injection valve is mounted on the internal combustion engine, the smaller an amount of the slurry is made.
